# EUROPÄISCHE PATENTANMELDUNG

(11) **EP 2 415 829 A1**
(43) Veröffentlichungstag der Anmeldung: **08.02.2012**
(21) Anmeldenummer: 10007960.7
(22) Anmeldetag: 30.07.2010
(51) Int. Cl.: C08K 9/08, C09C 1/02, C08K 3/26

(54) **Trockene Flüssigkeit**

(71) Anmelder: Schaefer Kalk GmbH & Co. KG, 65582 Diez (DE)
(72) Erfinder: Vogel, Roland Dr., 01239 Dresden (DE); Vucak, Marijan Dr., 65624 Altendiez (DE); Nover, Christoph Dr., 47495 Rheinberg (DE)
(74) Vertreter: Luderschmidt, Schüler & Partner

(57) **Zusammenfassung**

dry liquid, umfassend
a. mindestens ein Additiv mit einer Molmasse größer 20 g/mol, einer Schmelztemperatur kleiner 500°C und einer Siedetemperatur, gemessen bei 101325 Pa, größer 100°C sowie
b. mindestens ein Calciumcarbonat als Trägermaterial,
wobei das Calciumcarbonat ein gefälltes Calciumcarbonat ist.

Die dry liquid eignet sich insbesondere zum Einbringen mindestens eines vorzugsweise fluiden Additivs in eine chemische Zusammensetzung.

## Beschreibung

Die vorliegende Erfindung betrifft eine dry liquid, umfassend Calciumcarbonat als Trägermaterial, Verfahren zu ihrer Herstellung sowie ihre Verwendung.

dry liquids ("trockene Flüssigkeiten") sind bereits bekannt und bezeichnen im Sinne der vorliegenden Erfindung Zielsubstanzen, insbesondere Flüssigkeiten, welche auf oder in ein mineralisches oder organisches Trägermaterial gebracht werden und dann als frei fließendes Pulver vorliegen. Anwendung finden dry liquids in der Gummiindustrie, bei Pulverbeschichtungen, in Zementmischungen, bei Klebstoffen, in Lebensmitteln, in Medikamenten und in der chemischen Industrie.

Zum Beispiel können flüssige Silane mit dieser Technik in ein Pulver verwandelt werden.

In der Gummiindustrie und in der chemischen Industrie werden verschiedenste aktive Flüssigkeiten, wie Prozessöle, Beschleuniger, Vernetzer, Weichmacher, Flammschutzmittel und flüssige Kunststoffe, verwendet.

Viele von diesen Zielsubstanzen sind schwer handhabbar. Niedrigviskose Flüssigkeiten sind insbesondere schwierig in hochviskose Schmelzen von Thermoplasten oder Elastomere einzumischen. Hochviskose Flüssigkeiten oder stark klebende Flüssigkeiten oder Feststoffe mit niedrigem Schmelzpunkt sind insbesondere schwierig exakt zu dosieren.

Im Rahmen der vorliegenden Erfindung werden die auf das Trägermaterial aufgebrachten Zielsubstanzen als Additive bezeichnet.

Durch die Umwandlung des physikalischen Zustandes dieser Additive in einen ,dry liquid'-Zustand werden solche Prozesse deutlich vereinfacht. Die Handhabung wird deutlich leichter, dry liquids sind meist schneller einzumischen, die Verteilung wird gleichmäßiger und die Prozesszeiten werden verkürzt.

Die am meisten verbreiteten Trägermaterialen für dry liquids sind Kieselerde und Silikate, wobei der Anteil der vorzugsweise fluiden Additive bei bis zu 70-75 % im Verhältnis zum Trägermaterial liegt. Andere Trägermaterialien sind bekannt, werden aber seltener verwendet.

dry liquids auf Basis unterschiedlicher Trägermaterialien werden auch in der Fachliteratur bereits beschrieben.

In der Veröffentlichung L. Abbas, M. Bouquey, J.J. Flat, R. Muller "New method for post-processing crosslinking reaction" European Polymer Journal 44 (2008) 5, 1238-1246 werden die Verwendung von kugelförmigen Polyamiden mit einem mittleren Durchmesser von 5 µm, von Aerosilen mit einem Durchmesser von 12 nm und von vernetzten Polystyren-co-Divinylbenzen-Partikeln mit einem Durchmesser von 8 µm als Trägermaterial für 1,4-Butandiol beschrieben

In der Druckschrift D. Shi, R. K. Y. Li, Y. T. Zhu, Z. Ke, J. H. Yin, W. Jiang et al. "Nano-reactors for controlling the selectivity of the free radical grafting of maleic anhydride onto propylene in the melt" Polymer Engineering and Science 46 (2006) 10, 1443-1454 werden zwei verschieden Montmorillonite als Trägermaterial für dry liquids verwendet.

Das Patent US 6,924,320 betrifft vulkanisierbare thermoplastische Elastomere. Es wird die Herstellung einer dry liquid beschrieben, welche aus mindestens 40 Gew.-% eines Polypropylencopolymers, mindestens 10 Gew.-% Santoprene™, mindestens 11 Gew.-% LDPE, mindestens 0,5 Gew.-% Öl, mindestens 0,5 Gew.-% einer Mischung aus gesättigten und ungesättigten Fettsäuren mit organischen Säuremodifizierungen, mindestens 0,5 Gew.-% Silikon und mindestens 20 Gew.-% trockenem Gummimehl besteht.

Das Patent US 6,759,462 offenbart die Herstellung von dry liquids unter Verwendung von Calciumcarbonat als Trägermaterial. Es wird mit diesem Trägermaterial eine Beschichtungsmischung hergestellt, die in Wasser dispergierbar ist. Die dry liquid dieser Erfindung enthält relativ zum Gewicht des Trägermaterials 4-11 % eines polymeren Bindemittels, 0,6-1,5 % eines Verdickungsmittels und 0,1-0,35 % einer oberflächenaktiven Substanz. Weitere Details zum Calciumcarbonat sind der Druckschrift jedoch nicht zu entnehmen.

Die Anmeldung EP 0 376 089A1 beansprucht ein Verfahren zur Reingewinnung von im wesentlichen neutralen, schwerflüchtigen und reaktive olefinische Doppelbindungen aufweisenden organischen Verbindungen aus Einsatzmaterialien, die diese Komponenten zusammen mit untergeordneten Mengen saurer Reaktionsbestandteile und/oder entsprechender Hilfsstoffe in Flüssigphase enthalten, mittels Neutralisation oder Abtrennung der gebildeten Salze, wobei man zur Gewinnung von Reinprodukten, die auch ohne Destillation niedrige Rest-Säurezahlen mit niedrigen Farbzahlen verbinden, die Neutralisation mit festen feinpulvrigen Oxiden, Carbonaten und/oder Hydroxiden der Alkali-und/oder Erdalkalimetalle, gewünschtenfalls zusammen mit weiteren unlöslichen basischen Metalloxidverbindungen als Trockenneutralisation durchführt und nachfolgend die organische Flüssigphase von der feinpulvrigen Feststoffphase abtrennt.

Die Anmeldungen EP 1 787 957 A1 und EP 1 787 958 A1 beschreiben dry liquids mit einem Trägermaterial aus hydrophober, pyrogen hergestellter Kieselsäure mit einer Einzeitropfengröße von unterhalb 5 µm. Die dry liquid wird durch intensive Mischung mit dem fluiden Additiv hergestellt.

Die Anmeldung EP 1 842 871 A1 beschreibt eine Polyesterfolie, welche einen Hydrolyestabilisator enthält. Der Hydrolysestabilisator ist ein Epoxy-Alkylester von Fettsäuren oder eine Mischung von Fettsäuren und Glyceriden. Als Trägermaterial wird ein Silikat verwendet.

EP 1 842 662 A1 beschreibt vergleichbare Rezepturen wie die Anmeldung EP 1 842 871 A1 zur Herstellung von dry liquids mit einem Hydrolysestabilisator als fluides Additiv. Die dry liquid wird hier zur Hydrolysestabilisierung von mehrlagigen Polyesterfolien verwendet.

Bisherige dry liquids werden aus einem mineralischen oder organischen Trägermaterial hergestellt, welches eine kugelförmige oder kugelähnliche Geometrie aufweist. Aus dieser Geometrie resultiert ein ungünstiges OberflächenNolumenverhältnis des Trägermaterials. Dadurch kann nur eine begrenzte Menge von dem Additiv, insbesondere von einer Flüssigkeit, im Verhältnis zum Trägermaterial aufgebracht werden. Da jedoch für die Anwendung der dry liquid eine definierte Menge des aufgebrachten Additivs benötigt wird, muss ein relativ hoher Anteil an Trägermaterial für den Verarbeitungsprozess eingesetzt werden.

Aufgabe der vorliegenden Erfindung war es daher, bessere Möglichkeiten zum Aufbringen von Additiven, bevorzugt von Flüssigkeiten, aufzuzeigen und insbesondere eine Reduktion der Menge des einzusetzenden Trägermaterials im Verhältnis zur benötigten Menge an Additiv zu erreichen.

Die Aufgabe der Erfindung besteht insbesondere darin, Möglichkeiten aufzuzeigen, die eine vergleichsweise einfache und effiziente Zugabe von Additiven, insbesondere von fluiden Additiven, zu chemischen Zusammensetzungen, insbesondere zu Polymerzusammensetzungen, auch in größeren Mengen erlauben.

Dabei wurde eine möglichst einheitliche Verteilung des vorzugsweise fluiden Additivs in der chemischen Zusammensetzung, insbesondere in der Polymerzusammensetzung, angestrebt, die vorzugsweise nach möglichst kurzer Zeit erreicht werden sollte.

Schließlich wurde auch nach Wegen gesucht, das vorzugsweise fluide Additiv möglichst ohne chemische Nebenreaktionen oder zu frühe Reaktionen in der chemischen Zusammensetzung, insbesondere in der Polymerzusammensetzung, zu verteilen, um es dann zu einem späteren Zeitpunkt gezielt aktivieren zu können.

Gelöst werden diese sowie weitere Aufgaben, die sich aus den diskutierten Zusammenhängen unmittelbar ergeben, durch eine dry liquid mit allen Merkmalen des vorliegenden Anspruchs 1. Besonders zweckmäßige Abwandlungen der dry liquid werden in den rückbezogenen Unteransprüchen beschrieben. Weiterhin werden besonders vorteilhafte Verfahren zur Herstellung der dry liquid sowie besonders zweckmäßige Anwendungsgebiete unter Schutz gestellt.

Dadurch dass man eine dry liquid bereitstellt, die
a. mindestens ein vorzugsweise fluides Additiv mit einer Molmasse größer 20 g/mol, einer Schmelztemperatur kleiner 500°C und einer Siedetemperatur, gemessen bei 101325 Pa, größer 100°C sowie
b. mindestens ein Calciumcarbonat als Trägermaterial umfasst,
wobei das Calciumcarbonat ein gefälltes Calciumcarbonat ist, gelingt es auf nicht ohne weiteres vorhersehbare Weise, eine bessere Möglichkeit zum Aufbringen von Additiven, insbesondere von fluiden Additiven, aufzuzeigen und dabei eine Reduktion der Menge des einzusetzenden Trägermaterials im Verhältnis zur benötigten Menge an Additiv zu erreichen. Weiterhin weist die erfindungsgemäße dry liquid eine vergleichsweise geringe Schüttdichte auf und ist besonders rieselfähig.

Die vorliegende Erfindung ermöglicht es insbesondere, vorzugsweise fluide Additive auch in vergleichsweise großen Mengen gezielt, einfach und überaus effizient in eine chemische Zusammensetzung, insbesondere in eine Polymerzusammensetzung, einzubringen. Dabei kann durch die vergleichsweise kleinen dry liquid Partikel das vorzugsweise fluide Additiv äußerst homogen in der chemischen Zusammensetzung, insbesondere in der Polymerzusammensetzung, verteilt werden.

Der vergleichsweise kleine Abstand der dry liquid Partikel in der chemischen Zusammensetzung, insbesondere in der Kunststoffmatrix, verkürzt die notwendigen Diffusionswege für das vorzugsweise fluide Additiv, so dass in wesentlich kürzerer Zeit eine überaus gleichmäßige Verteilung des Additivs in der chemischen Zusammensetzung, insbesondere in der Kunststoffmatrix, erreicht werden kann. Notwendige Prozesszeiten werden dadurch erheblich verkürzt.

Schließlich kann das vorzugsweise fluide Additiv auf vergleichsweise schonende Weise in der chemischen Zusammensetzung, insbesondere in der Polymerzusammensetzung, verteilt werden. Hierdurch werden mögliche chemische Nebenreaktionen und/oder zu frühe Reaktionen des Additivs bestmöglich vermieden, welches wiederum eine gezielte chemische Aktivierung des Additivs in der chemischen Zusammensetzung zu einem späteren Zeitpunkt erlaubt.

Gegenstand der vorliegenden Erfindung ist eine dry liquid, umfassend
a. mindestens ein vorzugsweise fluides Additiv,
b. mindestens ein Calciumcarbonat als Trägermaterial.

Die Molmasse des vorzugsweise fluiden Additivs ist erfindungsgemäß größer 20 g/mol, vorzugsweise größer 25 g/mol, bevorzugt größer 50 g/mol, besonders bevorzugt größer 75 g/mol, zweckmäßigerweise mindestens 90 g/mol, insbesondere mindestens 100 g/mol.

Die Schmelztemperatur des vorzugsweise fluiden Additivs ist im Rahmen der vorliegenden Erfindung kleiner 500°C, günstigerweise kleiner 300°C, geeigneterweise kleiner 100°C, vorzugsweise kleiner 90°C, bevorzugt kleiner 80°C, besonders bevorzugt kleiner 70°C, zweckmäßigerweise kleiner 50°C, insbesondere kleiner 25°C.

In diesem Zusammenhang bezeichnet die Schmelztemperatur einer Substanz diejenige Temperatur, bei der die flüssige und die feste Phase der Substanz bei normalerweise 1013 hPa Druck im thermodynamischen Gleichgewicht stehen. Für weitere Details wird auf die Fachliteratur, insbesondere auf Römpp-Lexikon Chemie / Hrsg. Jürgen Falbe; Manfred Regitz. bearbeitet von Eckard Amelingmeier; Stuttgart, New York; Thieme; Band 5; 10. Auflage (1999); Stichwort "Schmelzpunkt" und die dort angegebenen Fundstellen verwiesen.

Die Siedetemperatur des vorzugsweise fluiden Additivs ist erfindungsgemäß größer 100°C, vorzugsweise größer 125°C, bevorzugt größer 150°C, besonders bevorzugt größer 175°C, zweckmäßigerweise mindestens 190°C, insbesondere mindestens 200°C.

In diesem Zusammenhang bezeichnet die Siedetemperatur einer Substanz diejenige Temperatur, bei der die flüssige und die gasförmige Phase der Substanz im thermodynamischen Gleichgewicht stehen. Sie wird vorliegend bei 101325 Pa gemessen. Für weitere Details wird auf die Fachliteratur, insbesondere auf Römpp-Lexikon Chemie / Hrsg. Jürgen Falbe; Manfred Regitz. bearbeitet von Eckard Amelingmeier; Stuttgart, New York; Thieme; Band 5; 10. Auflage (1999); Stichwort "Siedepunkt" und die dort angegebenen Fundstellen verwiesen.

Für die Zwecke der vorliegenden Erfindung weist das vorzugsweise fluide Additiv günstigerweise eine dynamische Viskosität, gemessen bei 25°C und einer Scherrate von 100 Hz, kleiner 10⁶ mPas, bevorzugt kleiner 10⁴ mPas, besonders bevorzugt kleiner 10³ mPas, zweckmäßigerweise kleiner 10² mPas, insbesondere kleiner 10 mPas auf.

Auf der anderen Seite ist die dynamische Viskosität der dry liquid, gemessen bei 25°C und einer Scherrate von 100 Hz, vorzugsweise größer 10⁵ mPas, bevorzugt größer 10⁶ mPas, besonders bevorzugt größer 10⁹ mPas, zweckmäßigerweise größer 10¹² mPas, insbesondere größer 10¹⁵ mPas.

Bei dem Calciumcarbonat handelt es sich im Rahmen der vorliegenden Erfindung um gefällte Calciumcarbonat Teilchen (PCC).

Die spezifische Oberfläche des Calciumcarbonats ist vorzugsweise größer 3,0 m²/g, bevorzugt größer 5,0 m²/g, besonders bevorzugt größer 10,0 m²/g, zweckmäßigerweise größer 15,0 m²/g, insbesondere größer 17,0 m²/g und liegt im Rahmen einer besonders bevorzugten Ausführungsform der vorliegenden Erfindung im Bereich von größer 3,0 m²/g bis 20,0 m²/g.

Das Gesamtintrusionsvolumen des Calciumcarbonats ist vorzugsweise größer 1,0 cm³/g, bevorzugt größer 1,5 cm³/g, besonders bevorzugt größer 2,0 cm³/g, zweckmäßigerweise größer 2,5 cm³/g, insbesondere größer 2,7 cm³/g. Es wird vorzugsweise mittels Quecksilberporosimetrie ermittelt, besonders bevorzugt gemäß DIN 66133, insbesondere unter Verwendung eines Quantachrome Porenmasters 60-GT.

Die Teilchengröße d_{50%} des Calciumcarbonats ist vorzugsweise größer 0,2 µm, bevorzugt größer 0,5 µm, insbesondere mindestens 1,0 µm und liegt im Rahmen einer besonders bevorzugten Ausführungsform der vorliegenden Erfindung im Bereich von größer 0,2 µm bis 2,0 µm.

Für die Zwecke der vorliegenden Erfindung wird die Teilchengröße vorzugsweise mittels Sedimentationsanalyse, zweckmäßigerweise unter Verwendung des Sedigraphs 5100 (Micromeritics GmbH), ermittelt.

Die Ölzahl des Calciumcarbonats ist vorzugsweise größer 25 g/100 g Calciumcarbonat, bevorzugt größer 40 g/100 g Calciumcarbonat, besonders bevorzugt größer 50 g/100 g Calciumcarbonat, zweckmäßigerweise mindestens 60 g/100 g Calciumcarbonat, ganz besonders bevorzugt mindestens 70 g/100 g Calciumcarbonat, insbesondere mindestens 75 g/100 g Calciumcarbonat. Sie wird vorzugsweise in Anlehnung an DIN ISO 787-5:1995-10 ermittelt.

Die Stampfdichte des Calciumcarbonats ist vorzugsweise kleiner 1,0 g/ml, bevorzugt kleiner 0,8 g/ml, besonders bevorzugt kleiner 0,5 g/ml, zweckmäßigerweise kleiner 0,4 g/ml, insbesondere höchstens 0,3 g/ml. Sie wird vorzugsweise in Anlehnung an DIN ISO 787-11 ermittelt.

Für die Zwecke der vorliegenden Erfindung umfasst die dry liquid vorzugsweise calcitisches Calciumcarbonat. Im Rahmen einer besonders bevorzugten Ausführungsform der vorliegenden Erfindung ist der Anteil von kristallinem Calciumcarbonat, insbesondere von calcitischem Calciumcarbonat, vergleichsweise hoch und vorzugsweise größer 10 Gew.-%, bevorzugt größer 25 Gew.-%, günstigerweise größer 50 Gew.-%, besonders bevorzugt größer 70 Gew.-%, ganz besonders bevorzugt größer 80 Gew.-%, insbesondere größer 90 Gew.-%, jeweils bezogen auf das Gesamtgewicht des Calciumcarbonats.

Für die Ermittlung der kristallinen Anteile hat sich die Röntgenbeugung mit einem internen Standard, vorzugsweise Aluminiumoxid, in Verbindung mit einer Rietveld-Verfeinerung ganz besonders bewährt.

Weiterhin haben sich für die Zwecke der vorliegenden Erfindung skalenoedrische, rhomboedrische und plättchenförmige, bevorzugt rhomboedrische und plättchenförmige, insbesondere plättchenförmige Calciumcarbonat-Teilchen besonders bewährt. Besonders bevorzugte Plättchen weisen dabei ein Verhältnis von Länge der Teilchen zur Dicke der Teilchen im Verhältnis von größer 5:1, vorzugsweise größer 8:1, insbesondere größer 10:1 sowie ein Verhältnis von Breite der Teilchen zur Dicke der Teilchen im Verhältnis von größer 5:1, vorzugsweise größer 8:1, insbesondere größer 10:1 auf.

Für weitere Details zu den Begriffen der Kristallmorphologie wird auf die Fachliteratur, insbesondere auf Römpp-Lexikon Chemie / Hrsg. Jürgen Falbe; Manfred Regitz. bearbeitet von Eckard Amelingmeier; Stuttgart, New York; Thieme; Band 3; 10. Auflage (1997); Stichwort "Kristallmorphologie" und die dort angegebenen Fundstellen verwiesen.

Die relativen Anteile der dry liquid können prinzipiell frei gewählt werden. Besonders bewährt haben sich jedoch solche dry liquids, die, bezogen auf ihr Gesamtgewicht,
a. 10,0 Gew.-% bis 90,0 Gew.-%, bevorzugt 20,0 Gew.-% bis 80,0 Gew.-%, besonders bevorzugt 25,0 Gew.-% bis 75,0 Gew.-%, insbesondere 30,0 Gew.-% bis 70,0 Gew.-% mindestens mindestens eines vorzugsweise fluiden Additivs sowie
b. 90,0 Gew.-% bis 10,0 Gew.-%, bevorzugt 80,0 Gew.-% bis 20,0 Gew.-%, besonders bevorzugt 75,0 Gew.-% bis 25,0 Gew.-%, insbesondere 70,0 Gew.-% bis 30,0 Gew.-% mindestens eines Calciumcarbonats umfassen,
wobei die Summe der Anteile des Additivs und des Calciumcarbonats vorzugsweise mindestens 75,0 Gew.-%, bevorzugt mindestens 90,0 Gew.-%, besonders bevorzugt mindestens 95,0 Gew.-%, zweckmäßigerweise mindestens 99,0 Gew.-%, insbesondere 100,0 Gew.-% ergibt.

Für die Zwecke der vorliegenden Erfindung besonders geeignete Additive umfassen flüssige Silane, Prozessöle, Beschleuniger, Vernetzer, Weichmacher, Flammschutzmittel und flüssige Kunststoffe, die ggf. noch weitere Additive enthalten können, bevorzugt in Mengen von bis zu 25,0 Gew.-%, besonders bevorzugt in Mengen von bis zu 10,0 Gew.-%, insbesondere in Mengen von bis zu 5,0 Gew.-%, jeweils bezogen auf das Gesamtgewicht des Additivs.

Die Herstellung des dry liquids kann auf an sich bekannte Weise erfolgen, indem man die Komponenten miteinander mischt. Besonders bewährt hat sich jedoch eine Vorgehensweise, bei welcher man
i. das vorzugsweise fluide Additiv in einem Lösungsmittel, bevorzugt in einem organischen Lösungsmittel mit einer Siedetemperatur kleiner 100°C, insbesondere in Methanol, Ethanol, n-Propanol, iso-Propanol, Diethylether, Aceton und/oder Tetrahydrofuran löst,
ii. die Lösung aus Schritt i. mit dem Calciumcarbonat vermischt und
iii. das Lösungsmittel entfernt, vorzugsweise durch Temperaturerhöhung und/oder Anlegen von Unterdruck.

Zweckmäßigerweise wird hierbei auf eine innige Durchmischung der Komponenten geachtet, insbesondere bevor das Lösungsmittel entfernt wird.

Im Rahmen einer weiteren besonders bevorzugten Vorgehensweise der vorliegenden Erfindung erfolgt die Vermischung der Komponenten direkt ohne die Verwendung von Lösungsmitteln oder anderen Additiven, die aus dem Endprodukt wieder entfernt werden müssen. In diesem Zusammenhang hat sich der Einsatz von Heizkühlmischern als ganz besonders vorteilhaft erwiesen.

Mögliche Anwendungsgebiete der erfindungsgemäßen dry liquid sind dem Fachmann unmittelbar offensichtlich. Sie eignet sich insbesondere zum Einbringen mindestens eines vorzugsweise fluiden Additivs in eine chemische Zusammensetzung, insbesondere in eine Kunststoffzusammensetzung.

Hierbei kommt insbesondere die vergleichsweise leichte Handhabbarkeit der erfindungsgemäßen dry liquids zum Tragen, die sich aus der vergleichsweise kohäsionslosen, frei fließenden Schüttbarkeit der dry liquids ergibt, auch wenn das Additiv relativ kohäsiv und zusammenhaltend und daher nur schwer zu handhaben ist.

Die Klebrigkeit der dry liquid ist vorzugsweise äußerst gering.

Die Schüttbarkeit der dry liquid ist vorzugsweise durch eine Schüttdichte der nicht komprimierten dry liquid gemäß DIN ISO 697 und EN ISO 60 kleiner 0,5 g/cm³ gekennzeichnet.

Die Erfindung ist beispielsweise anwendbar in Bereichen der Kunststoffindustrie. Insbesondere teilkristalline Polymere oder Elastomere können mit den der Erfindung zugrunde liegenden dry liquids während des Verarbeitungsprozesses vermischt werden. Nach der Verarbeitung diffundieren das vorzugsweise fluide Additiv aus dem Trägermaterial und verteilt sich in der Kunststoffmatrix. Da während der kurzen Verarbeitungszeit im Schmelzezustand nur sehr wenig Additiv in die Kunststoffmatrix diffundiert, können chemische Reaktionen des Additivs mit der Kunsststoffmatrix während des Verarbeitungsprozesses nahezu vollständig vermieden werden. Dies ist beispielweise ein großer Vorteil für den Schmelzspinnprozess zur Herstellung von vernetzten Polymerfäden und Polymerhohlfäden. Eine teilweise Vernetzung des Polymers vor dem eigentlichen Spinnprozess verhindert die Möglichkeit des Schmelzspinnens, da die notwendige Deformation des Materials im Prozess nicht möglich ist. Die Vernetzung sollte daher möglichst erst nach dem eigentlichen Spinnprozess erfolgen.

Durch geeignete Aktivierung des eindiffundierten Additivs, wie zum Beispiel durch Einbringen von Wasser oder anderen Chemikalien, Temperaturerhöhung, UV-Bestrahlung oder Elektronenbestrahlung, können chemische Reaktionen in der chemischen Zusammensetzung, insbesondere zwischen der Kunststoffmatrix und dem Additiv ausgelöst werden. Diese chemische Reaktionen können insbesondere zur Erzeugung von Verzweigungen und Vernetzungen genutzt werden.

Weiterhin können durch das eindiffundierte Additiv die mechanischen, physikalischen und chemischen Eigenschaften der chemischen Zusammensetzung, insbesondere der Kunststoffmatrix modifiziert werden. Als besonders zweckmäßige Beispiele von vorzugsweise fluiden Additiven für diese Effekte sind Weichmacher und flüssige Stabilisatoren zu nennen.

Nachfolgend wird die Erfindung durch mehrere Beispiele weiter veranschaulicht, ohne dass hierdurch eine Beschränkung des Erfindungsgedankens erfolgen soll.

Die Eigenschaften der verwendeten Calciumcarbonat Materialien werden in Tabelle 1 zusammengefasst.

**Tabelle 1**

| | PCC 1 | PCC 2 | PCC 3 | PCC 4 |
|---|---|---|---|---|
| Kristallmodifikation (Röntgenbeugung) | Calcit skalenoedrisch | Calcit skalenoedrisch | Calcit rhomboedrisch | Calcit plättchenförmig |
| Stampfdichte [g/ml] (DIN EN ISO 787-11) | 0,5 | 0,7 | 0,3 | 0,3 |
| spezifische Oberfläche BET [m²/g] | 8,7 | 5,3 | 34,0 | 17,2 |
| Teilchengröße d_{50%} [µm] (Sedigraph) | 1,0 | 3,3 | 0,7 | 1,0 |
| Ölzahl [g/100 g dry liquid] | 41 | 42 | 60 | 78 |
| Gesamtintrusionsvolumen [cm³/g] (Quecksilberporosimetrie)¹ | 1,8 | 1,3 | 2,5 | 2,8 |

| | | | | |
|---|---|---|---|---|
| ¹: DIN 66133; Quantachrome Porenmasters 60-GT | | | | |

### Beispiel 1

Mit den genannten Calciumcarbonat Materialien wurden dry liquids A bis D hergestellt. Als fluides Additiv wurde 1,4-Butandiol verwendet. 1,2 g 1,4-Butandiol wurden in 5 ml Tetrahydrofuran gelöst. 1,2 g Calciumcarbonat wurde dann in dieser Lösung durch intensives Rühren dispergiert. Das Lösungsmittel Tetrahydrofuran wurde durch 24 Stunden Lagerung bei Raumtemperatur verdampft. Das Pulver wurde anschließend 15 min bei 130 °C getrocknet.

Es wurden feindisperse, leicht rieselnde Pulver mit folgenden Eigenschaften erhalten:
dry liquid A
Calciumcarbonat: PCC 1
vergleichsweise geringes Schüttvolumen
vergleichsweise viel 1,4-Butandiol-Überstand
klebrig
Gesamturteil: ausreichend
dry liquid B
Calciumcarbonat: PCC 2
Schüttvolumen etwas besser (größer) als bei dry liquid A
etwas weniger 1,4-Butandiol-Überstand als bei dry liquid A
etwas weniger klebrig als dry liquid A
Gesamturteil: schwach befriedigend
dry liquid C
Calciumcarbonat: PCC 3
Schüttvolumen deutlich besser als bei dry liquid B
fast kein 1,4-Butandiol-Überstand; deutlich besser als bei dry liquid B deutlich weniger klebrig als dry liquid B
Gesamturteil: fast gut
dry liquid D
Calciumcarbonat: PCC 4
sehr hohes Schüttvolumen; ungefähr das doppelte Schüttvolumen verglichen mit dry liquid A
kein 1,4-Butandiol-Überstand
nur minimale Verklebung der Primärpartikel
Gesamturteil: sehr gut

### Beispiel 2

In einem Microcompounder wurden die dry liquids aus Beispiel 1 nach folgender Rezeptur bei 110 °C mit 50 Umdrehungen pro Minute 4 Minuten gemischt.

Rezeptur:
4 g Polymer Lotader 8200, Fa. ARKEMA (Terpolymer von Ethylen (E), Ethyl Acrylat (EA) und Maleinsäureanhydrid (MAH))
0.096 g dry liquid
0,008 g Katalysator (p-Toluolsulfonsäure (Monohydrat))

Alle vier Pulver ließen sich problemlos einmischen. Mit der dry liquid D erhielt man ein komplett weißes Polymer (bestes Produkt).

Die fertigen Mischungen wurden in einer Kolbenspinneinrichtung bei 110 °C mit einer Abzugsgeschwindigkeit von 200 m/min versponnen. Nach einer Temperung bei 40 °C über 10 Tage wurde an den Fäden mit einer Heißextraktion der Gelgehalt bestimmt. Die Fadenprobe wies einen Gelgehalt von 47 % auf. Durch ATR-FTIR-Messungen ließ sich die Vernetzung ebenfalls nachweisen. Rheologische Messungen zeigten ebenfalls deutlich eine signifikante Veränderung der mechanischen Eigenschaften durch die Vernetzung.

Das verwendete Ausgangspolymer erbrachte auch mit anderen Vernetzungsverfahren keinen höheren Gelgehalt. Daraus lässt sich schlussfolgern, dass mit der Verwendung der dry liquids eine maximale Vernetzung erreicht wurde.

### Beispiel 3

Mit PCC 4 wurde eine dry liquid E hergestellt. Als fluides Additiv wurde Ditrimethylolpropantetraacrylat (DTMPTA) Ebecryl 140, Fa. Cytec, verwendet. 2 g Ebecryl 140 wurden in 5,5 ml Tetrahydrofuran gelöst. 1,2 g PCC 4 wurde dann in diese Lösung durch intensives Rühren dispergiert. Das Lösungsmittel Tetrahydrofuran wurde durch 24 Stunden Lagerung bei Raumtemperatur verdampft. Das Pulver wurde anschließend 15 min bei 130 °C getrocknet. Es ergab sich ein feindisperses, leicht rieselndes Pulver.

Im Vergleich mit anderen gefällten Calciumcarbonat Materialien (PCC 1, PCC 2, PCC 3) wies das resultierende Pulver das doppelte Schüttvolumen auf. Folglich führt die Verwendung von PCC 4 für die dry liquid E zu einem Pulver mit einer minimalen Verklebung der Primärpartikel.

### Beispiel 4

In einem Microcompounder wurde die dry liquid aus Beispiel 3 nach folgender Rezeptur bei 190 °C mit 80 Umdrehungen pro Minute 5 Minuten gemischt.

Rezeptur:
3 g Polymer mPE Engage 8200, Fa. Dupont (Metallocen-Polyethylen mit elastomeren Eigenschaften)
0,15 g dry liquid E

Die fertige Mischung wurde in einer Kolbenspinneinrichtung bei 240 °C mit einer Abzugsgeschwindigkeit von 250 m/min versponnen. Die ersponnenen Fäden wurden mit einer üblichen UV-Lampe bestrahlt, um den Strahlenvernetzer Ebecryl 140 zu aktivieren.

Anschließend wurde an den Fäden mit einer Heißextraktion der Gelgehalt bestimmt. Die Fadenprobe wies einen Gelgehalt von 64 % auf. Die Vernetzung wurde auch mit rheologischen Messungen nachgewiesen.

Das verwendete Ausgangspolymer erbrachte auch mit anderen Vernetzungsverfahren keinen höheren Gelgehalt. Daraus lässt sich schlussfolgern, dass mit der Verwendung der dry liquid E eine optimale Vernetzung erreicht wurde.

### Beispiel 5

Mit PCC 4 wurde eine dry liquid F hergestellt. Als fluide Additive wurden Phenylethylen (Styrol) und Methacryloxypropyltrimethoxysilan (VMMS) verwendet. Weiterhin sollte das feste Benzoylperoxid (BPO) auf den Träger PCC 4 gebracht werden. 0,36 g BPO, 1 g VMMS und 0,12 g Styrol wurden in 7 g Aceton gelöst. 1,5 g PCC 4 wurden dann in diese Lösung durch intensives Rühren dispergiert. Das Lösungsmittel Aceton wurde durch 24 Stunden Lagerung bei Raumtemperatur verdampft. Das Pulver wurde anschließend 15 min bei 130 °C getrocknet. Es ergab sich ein feindisperses, leicht rieselndes Pulver.

Im Vergleich mit anderen gefällten Calciumcarbonat Materialien (PCC 1, PCC 2, PCC 3) wies das resultierende Pulver das doppelte Schüttvolumen auf. Folglich führt die Verwendung von PCC 4 für die dry liquid F zu einem Pulver mit einer minimalen Verklebung der Primärpartikel.

### Beispiel 6

In einem Microcompounder wurde die dry liquid des Beispiels 5 nach folgender Rezeptur bei 215 °C mit 75 Umdrehungen pro Minute 4 Minuten gemischt. Nach einer dreitägigen Lagerung im Wasserbad wurde diese Probe mit FTIR untersucht. Es konnte damit das Vorhandensein von Si-O-Si Bindungen als Nachweis für die erfolgte Silanvernetzung bestätigt werden.

### Beispiele 7 und 8

Mit PCC 4 wurden zwei weitere dry liquids hergestellt.

Die Vernetzungsagentien TAC (Triallylisocyanurat) oder DTMPTA und ein Photoinitiator (4-Chlorbenzophenon) wurden in 10 ml Ethanol gelöst oder verdünnt.

PCC 4 wurde dann in diese Lösung dispergiert und intensiv gerührt.

Nach 24 h bei Raumtemperatur war das Lösungsmittel (Ethanol) verdampft.

Die genauen Rezepturen werden in Tabelle 2 zusammengefasst.

**Tabelle 2**

| | PCC 4 | TAC | DTMPTA | Photoinitiator | Ethanol |
|---|---|---|---|---|---|
| | [g] | [g] | [g] | [g] | [ml] |
| dry liquid G | 2g | 0,5 | | 0,5 | 10 |
| dry liquid H | 2g | | 0,5 | 0,5 | 10 |

### Beispiele 9 bis 13

Im Microcompunder (130 °C, 5 min nach Aufschmelzen, 80 min⁻¹) wurden Mischungen der dry liquids und von Vergleichsproben mit dem Metallocenpolyethylen hergestellt. Die genaue Zusammensetzungen der untersuchten Proben werden in Tabelle 3 zusammengefasst.

**Tabelle 3**

| Beispiel | mPE | TAC | DTMPTA | dry liquid G | dry liquid H | Photoinitiator |
|---|---|---|---|---|---|---|
| | [g] | [g] | [g] | [g] | [g] | [g] |
| 9 | 3,5 | | | | | |
| 10 | 3,5 | 0,07 | | | | 0,07 |
| 11 | 3,5 | | 0,07 | | | 0,07 |
| 12 | 3,5 | | | 0,42 | | |
| 13 | 3,5 | | | | 0,42 | |

Die Proben wurden zu Folien gepresst und mit einer UV-Lampe jeweils 5 min bestrahlt.

Mit allen fünf Proben wurden bei 120 °C rheologische Untersuchungen durchgeführt, die eine deutliche Vernetzung der Proben mit Photoinitiator zeigen. Die beobachteten Ergebnisse werden in den Tabellen 4 und 5 zusammengefasst.

**Tabelle 4: Speichermodul G' der vernetzten Polymerproben bei 120°C in Abhängigkeit von der Frequenz ω̅**

| ω̅ | Beispiel 9 | Beispiel 10 | Beispiel 11 | Beispiel 12 | Beispiel 13 |
|---|---|---|---|---|---|
| [rad/s] | [Pa] | [Pa] | [Pa] | [Pa] | [Pa] |
| 0,1 | 16736 | 26698 | 31400 | 28629 | 43091 |
| 0,15849 | 16051 | 23733 | 28735 | 26338 | 38459 |
| 0,25119 | 15214 | 20899 | 26332 | 23917 | 33880 |
| 0,39811 | 14389 | 18426 | 23869 | 21568 | 29713 |
| 0,63096 | 13533 | 16368 | 21207 | 19376 | 25935 |
| 1 | 12606 | 14534 | 18777 | 17277 | 22572 |
| 1,5849 | 11638 | 12931 | 16582 | 15296 | 19583 |
| 2,5119 | 10624 | 11434 | 14515 | 13431 | 16849 |
| 3,9811 | 9550,4 | 9986,9 | 12561 | 11669 | 14378 |
| 6,3096 | 8451,1 | 8618,7 | 10734 | 10023 | 12064 |
| 10 | 7335,7 | 7313,5 | 9045,9 | 8491,3 | 9750,3 |
| 15,849 | 6229,4 | 6047,1 | 7492,1 | 7061,7 | 7703,2 |
| 25,119 | 5150,1 | 4774,6 | 6050,8 | 5692,4 | 5880 |
| 39,811 | 4105,5 | 3458,4 | 4757,9 | 4401,3 | 4351,8 |
| 63,096 | 3113,7 | 2299,6 | 3628 | 3092,9 | 2906,7 |
| 100 | 2147,8 | 1315,4 | 2613,6 | 1626,6 | 1625,2 |

**Tabelle 5: tan ö = G"/G' der vernetzten Polymerproben bei 120°C in Abhängigkeit von der Frequenz ω̅**

| ω̅ | Beispiel 9 | Beispiel 10 | Beispiel 11 | Beispiel 12 | Beispiel 13 |
|---|---|---|---|---|---|
| [rad/s] | | | | | |
| 0,1 | 8,6632 | 1,8407 | 2,2605 | 2,3804 | 1,7619 |
| 0,15849 | 6,4293 | 1,9459 | 2,3248 | 2,4576 | 1,8333 |
| 0,25119 | 5,4446 | 2,0749 | 2,3249 | 2,4388 | 1,8564 |
| 0,39811 | 4,6082 | 2,1226 | 2,2205 | 2,3644 | 1,841 |
| 0,63096 | 3,9051 | 2,1268 | 2,1427 | 2,2623 | 1,8 |
| 1 | 3,349 | 2,098 | 2,0358 | 2,1495 | 1,7522 |
| 1,5849 | 2,8975 | 2,041 | 1,9292 | 2,0291 | 1,6951 |
| 2,5119 | 2,5341 | 1,9429 | 1,8109 | 1,8951 | 1,6209 |
| 3,9811 | 2,2153 | 1,8145 | 1,6741 | 1,748 | 1,5241 |
| 6,3096 | 1,9195 | 1,6545 | 1,5274 | 1,5855 | 1,4053 |
| 10 | 1,6475 | 1,477 | 1,3673 | 1,4143 | 1,2676 |
| 15,849 | 1,3986 | 1,2867 | 1,2008 | 1,2369 | 1,1183 |
| 25,119 | 1,1688 | 1,0958 | 1,0302 | 1,0542 | 0,9638 |
| 39,811 | 0,95267 | 0,9009 | 0,856 | 0,86933 | 0,80643 |
| 63,096 | 0,74059 | 0,70597 | 0,67379 | 0,68005 | 0,63821 |
| 100 | 0,52136 | 0,50172 | 0,47499 | 0,47626 | 0,45385 |

Die hergestellten dry liquids sind zur Herstellung von Proben zur UV-Vernetzung sehr gut geeignet.

Es gibt keinen signifikanten Unterschied zwischen den Proben, bei denen die Reagenzien direkt eingemischt und den Proben, bei denen die Reagenzien als dry liquid eingesetzt worden sind.

### Beispiel 14

Mit PCC 4 wurde eine dry liquid I hergestellt. Als fluides Additiv wurde DTMPTA Ebecryl 140, Fa. Cytec, verwendet. Zusätzlich wurde der Photoinitiator 4-Chlorbenzophenon verwendet, welcher bei Raumtemperatur als Feststoff vorliegt. 1 g Ebecryl 140 und 1 g 4-Chlorbenzophenon wurden in 6 ml Ethanol gelöst. 2 g PCC 4 wurden dann in diese Lösung durch intensives Rühren dispergiert. Das Lösungsmittel Ethanol wurde durch 24 Stunden Lagerung bei Raumtemperatur verdampft. Es ergab sich ein feindisperses, leicht rieselndes Pulver.

Im Vergleich mit anderen gefällten Calciumcarbonat Materialien (PCC 1, PCC 2, PCC 3) wies das resultierende Pulver das doppelte Schüttvolumen auf. Folglich führt die Verwendung von PCC 4 für die dry liquid I zu einem Pulver mit einer minimalen Verklebung der Primärpartikel.

### Beispiel 15

In einem Microcompounder wurde die dry liquid I nach folgender Rezeptur bei 130°C mit 70 Umdrehungen pro Minute 4 Minuten gemischt.
Rezeptur:
3 g Polymer mPE Engage 8200, Fa. Dupont DOW
0,24 g dry liquid I

Die fertige Mischung wurde in einer Kolbenspinneinrichtung bei 240°C mit einer Abzugsgeschwindigkeit von 250 m/min versponnen. Die ersponnenen Fäden wurden mit einer üblichen UV-Lampe bestrahlt, um die Vernetzung zu aktivieren. Anschließend wurde an den Fäden mit einer Heißextraktion der Gelgehalt bestimmt. Die Fadenprobe wies einen Gelgehalt von 64 % auf. Die Vernetzung wurde auch mit rheologischen Messungen nachgewiesen. Das verwendete Ausgangspolymer erbrachte auch mit anderen Vernetzungsverfahren keinen höheren Gelgehalt. Daraus lässt sich schlussfolgern, dass mit der Verwendung der dry liquid I eine optimale Vernetzung erreicht wurde.

## Patentansprüche

1. dry liquid, umfassend
a. mindestens ein Additiv mit einer Molmasse größer 20 g/mol, einer Schmelztemperatur kleiner 500°C und einer Siedetemperatur, gemessen bei 101325 Pa, größer 100°C sowie
b. mindestens ein Calciumcarbonat als Trägermaterial,
**dadurch gekennzeichnet, dass** das Calciumcarbonat ein gefälltes Calciumcarbonat ist.

2. dry liquid nach Anspruch 1, **dadurch gekennzeichnet, dass** das Additiv eine Molmasse größer 75 g/mol sowie eine Siedetemperatur, gemessen bei 101325 Pa, größer 150°C aufweist.

3. dry liquid nach Anspruch 1 oder 2, **dadurch gekennzeichnet, dass** das Additiv eine dynamische Viskosität, gemessen bei 25°C und einer Scherrate von 100 Hz, kleiner 10⁶ mPas aufweist.

4. dry liquid nach mindestens einem der vorangehenden Ansprüche, **dadurch gekennzeichnet, dass** das Calciumcarbonat eine spezifische Oberfläche (BET) größer 3,0 m²/g aufweist.

5. dry liquid nach mindestens einem der vorangehenden Ansprüche, **dadurch gekennzeichnet, dass** das Calciumcarbonat ein Gesamtintrusionsvolumen größer 1,0 cm³/g aufweist.

6. dry liquid nach mindestens einem der vorangehenden Ansprüche, **dadurch gekennzeichnet, dass** das Calciumcarbonat eine Teilchengröße d_{50%} größer 0,2 µm aufweist.

7. dry liquid nach mindestens einem der vorangehenden Ansprüche, **dadurch gekennzeichnet, dass** das Calciumcarbonat eine Ölzahl größer 25 g/100 g Calciumcarbonat aufweist.

8. dry liquid nach mindestens einem der vorangehenden Ansprüche, **dadurch gekennzeichnet, dass** das Calciumcarbonat eine Stampfdichte kleiner 1,0 g/ml aufweist.

9. dry liquid nach mindestens einem der vorangehenden Ansprüche, **dadurch gekennzeichnet, dass** sie calcitisches Calciumcarbonat umfasst.

10. dry liquid nach mindestens einem der vorangehenden Ansprüche, **dadurch gekennzeichnet, dass** sie plattchenförmiges Calciumcarbonat umfasst.

11. dry liquid nach mindestens einem der vorangehenden Ansprüche, **dadurch gekennzeichnet, dass** sie, bezogen auf ihr Gesamtgewicht,
a. 10,0 Gew.-% bis 90,0 Gew.-% mindestens eines Additivs sowie
b. 90,0 Gew.-% bis 10,0 Gew.-% mindestens eines Calciumcarbonats umfasst.

12. dry liquid nach mindestens einem der vorangehenden Ansprüche, **dadurch gekennzeichnet, dass** sie mindestens ein flüssiges Silan, Prozessöl, Beschleuniger, Vernetzer, Weichmacher, Flammschutzmittel und/oder mindestens einen flüssigen Kunststoff als Additiv umfasst.

13. Verfahren zur Herstellung einer dry liquid nach mindestens einem der vorangehenden Ansprüche, **dadurch gekennzeichnet, dass** man
i. das Additiv in einem Lösungsmittel löst,
ii. die Lösung aus Schritt i. mit dem Calciumcarbonat vermischt und
iii. das Lösungsmittel entfernt.

14. Verfahren zur Herstellung einer dry liquid nach mindestens einem der Ansprüche 1 bis 12, **dadurch gekennzeichnet, dass** man die Komponenten direkt ohne die Verwendung von Lösungsmitteln oder anderen Additiven mischt, die aus dem Endprodukt wieder entfernt werden müssen.

15. Verfahren nach Anspruch 14, **dadurch gekennzeichnet, dass** man die Komponenten in einem Heizkühlmischer verarbeitet.

16. Verwendung einer dry liquid nach mindestens einem der Ansprüche 1 bis 12 zum Einbringen mindestens eines Additivs in eine chemische Zusammensetzung.
